# EUROPEAN PATENT SPECIFICATION

(11) **EP 4 652 223 B1**
(45) Date of publication and mention of the grant of the patent: **14.10.2026**
(21) Application number: 24702679.2
(22) Date of filing: 19.01.2024
(51) Int. Cl.: C08J 11/16, C08J 11/14, C08J 11/18, B01J 23/00

(54) **METHOD FOR PROCESSING RUBBER COMPOSITE MATERIALS**
VERFAHREN ZUR VERARBEITUNG VON KAUTSCHUKVERBUNDWERKSTOFFEN
PROCÉDÉ DE TRAITEMENT DE MATÉRIAUX COMPOSITES EN CAOUTCHOUC

(30) Priority: 19.01.2023 EP 23152528
(43) Date of publication of application: 26.11.2025
(73) Proprietor: Universiteit Antwerpen, 2000 Antwerpen (BE)
(72) Inventor: VANDE VELDE, Christophe, 2020 Antwerpen (BE); BILLEN, Pieter, 2020 Antwerpen (BE); FISHEL, Yanou, 2020 Antwerpen (BE)
(74) Representative: De Clercq & Partners
(86) International application number: PCT/EP2024/051228
(87) International publication number: WO 2024/153780

(56) References cited:
- JP-A- 2002 097 386
- US-A- 5 516 952
- ANONYMOUS: "What's In a Tire | U.S. Tire Manufacturers Association", 1 January 2020 (2020-01-01), pages 1 - 4, XP93058499, Retrieved from the Internet <URL:https://www.ustires.org/whats-tire-0> [retrieved on 20230627]
- RIOS RACHEL R.V.A. ET AL: "Devulcanization of styrenebutadiene (SBR) waste tire by controlled oxidation", JOURNAL OF THE BRAZILIAN CHEMICAL SOCIETY, vol. 17, no. 3, 1 January 2006 (2006-01-01), pages 603 - 608, XP093058121, ISSN: 0103-5053, DOI: 10.1590/S0103-50532006000300027
- YAMASHITA S ET AL: "Synthesis of Liquid Rubber Containing Carboxyl Groups by Ozonolysis of Waste Tire Crushed Rubber", NIPPON GOMU KYOKAISHI, vol. s49, no. 11, 15 March 1976 (1976-03-15), pages 844 - 847, XP93058143, Retrieved from the Internet <URL:https://www.jstage.jst.go.jp/article/gomu1944/49/11/49_844/_article/-char/en> DOI: https://doi.org/10.2324/gomu.49.11_844
- YAMASHITA S ET AL: "Synthesis of Liquid Rubber Containing Carboxyl Groups by Ozonolysis of Waste Tire Crushed Rubber", vol. s49, no. 11, 15 March 1976 (1976-03-15), pages 844 - 847, XP093058143, Retrieved from the Internet <URL:https://www.jstage.jst.go.jp/article/gomu1944/49/11/49_844/_article/-char/en> [retrieved on 20230628], DOI: https://doi.org/10.2324/gomu.49.11_844
- MCSWEENEY G. P.: "Ozonolysis of natural rubber", JOURNAL OF POLYMER SCIENCE: PART A-1, POLYMER CHEMISTRY, vol. 6, no. 9, 1 September 1968 (1968-09-01), US, pages 2678 - 2680, XP093058014, ISSN: 0449-296X, DOI: 10.1002/pol.1968.150060923
- CHAKRAVARTY SHOM NATH ET AL: "Structural characterization of natural and vulcanized rubber by ozonolysis", JOURNAL OF APPLIED POLYMER SCIENCE, vol. 11, no. 1, 1 January 1967 (1967-01-01), US, pages 37 - 55, XP093058059, ISSN: 0021-8995, DOI: 10.1002/app.1967.070110103

## Description

### Field of the invention

The present invention generally relates to the processing of rubber composite materials, comprising vulcanized rubber polymers and a filler material. More in particular, the present invention relates to the processing of waste materials comprising or consisting of rubber composite materials, particularly based on natural, butadiene, butadiene-styrene, or isoprene-based rubbers, including but not limited to used tires, and to the conversion of these waste materials into valuable products and compounds and/or to the recovery of valuable products therefrom.

### Background of the invention

Despite much effort, the re-use and recycling of many materials and products remains a very difficult and challenging process. Often, such materials have no further use at the end of their life cycle, thus creating significant economic and ecological problems. Little if any of the resources used to make these materials can be recovered in a reliable way. This is particularly the case for old rubber tires.

In general, rubber tires are rubber composite materials comprising different rubber polymers, including vulcanized rubber polymers. In general, in the production of tires, natural rubbers, synthetic rubbers such as styrene-butadiene copolymers and butadiene are mixed, and sulphur is added in order to vulcanize the elastomers resulting in a strong thermoset network. Inorganic vulcanization accelerators, such as zinc oxide and/or organic accelerators such as stearic acid or derivatives of benziothiazole, thiocarbanilide, guanidine or morpholine are added to increase the efficiency of the vulcanization process. Furthermore, several fillers, such as carbon black and silica, are added to increase the rigidness of the thermoset structure, to help protect against UV-degradation and wick away heat. Anti-ozonants such as hydrocarbon waxes and/or p-phenylenediamine derivatives are used to protect the tire materials against ozone damage. Finally, to tie the entire structure together, reinforcing materials, such as steel wiring and textile fibres such as nylon and aramid are added.

As tires have been constructed to be mechanically and chemically resistant and to be as long-lasting as possible, their recycling or re-use is very problematic. Historically, the vast majority of worn-out rubber tires has been disposed of by burning or landfilling. Since landfilling has been banned since 2003 in Europe, recycling of tires started to win more ground. For instance, tires can be subject to mechanical recycling in which they are shredded into a granulate, also referred to as crumb rubber. The steel wires are removed magnetically, and a large part of the textile fibres are washed away. The obtained crumb rubber is used as a filler material for artificial turf, flooring that needs a certain elasticity (e.g. playgrounds, tennis fields ...), or can be compounded into asphalt. The crumb rubber may also be used as a fuel source, for instance as a partial substitute for coke in cement kilns. Rubber waste material can also be partially devulcanized with toxic reagents and solvents, thermally, also known as rubber pyrolysis, and/or mechanically.

The main issue with these tire waste treatments is that in most cases further depreciation of the compounds making up the rubber composite material takes place, making the tire lifecycle essentially linear. Devulcanization and reclaiming techniques reach low yields and result in a semi-finished product to be compounded in with virgin rubber material that ultimately performs less adequately than virgin rubber material alone. Pyrolysis of tires yields a large variety of different compounds, which are often difficult to recover (e.g. hydrogen gas, methane, ethane ...) due to the working mechanism of pyrolysis. In addition, pyrolyzing scrap tires to carbonaceous materials that are fouled with minerals such as zinc oxide is difficult to justify.

Within the general context of reducing the consumption of natural resources and reducing environmental pollution, there thus remains a need in the art for new recycling and/or conversion processes for rubber composite materials, particularly for rubber composite materials comprising vulcanized rubber polymers, including but not limited to tires. In particular, there is a need in the art for sustainable processes wherein waste comprising or consisting of rubber composite materials, including but not limited to tires, is used as a renewable feedstock in the conversion into and synthesis of valuable molecules, with limited if any depreciation of the feedstock. US5516952A discloses a method to breaking down vulcanised rubber waste by swelling and selective oxidation (e.g. by using Ozone) to produce relatively high yields of lower molecular weight (i.e.: C3-C8) hydrocarbons and oxygenated hydrocarbons which are suitable for use as a fuel or which can be separated or further refined to produce various commodity chemicals, specialty chemicals or both. US5516952A does not explicitly discloses that bifunctional oxygen-containing compounds are obtained upon a work-up step and it does not disclose the use of an aqueous composition comprising 98-100 wt% of water to react the solubilized reaction products after reacting the solvent swollen rubber material with ozone and separating out a solid residue.

### Summary of the invention

The inventors have developed an improved process for the processing and conversion of rubber composite materials, particularly waste rubber composite materials, such as used tires, that addresses the above indicated needs. The present invention provides an elegant strategy to use waste rubber composite materials comprising vulcanized rubber polymers and filler materials, as starting material to generate valuable bifunctional oxygen-containing compounds of different molecular weight in a high yield, and to recover the filler materials for reuse/recycling. By treating rubber composite materials, particularly in solvent-swollen form, with ozone, the rubber polymers, including the vulcanized rubber polymers, are converted into bifunctional molecules, with end-standing oxygen-containing functional groups, which can easily be separated from the filler material. In certain embodiments, advantageously, simultaneously, the sulphur of the vulcanized rubber polymers is oxidized to SO₂ or SO₃. Depending on the work-up after the ozone treatment, dialcohols, dicarboxylic acids, mixed aldehydes and ketones or acids/ketones can be obtained in a high yield. Advantageously, the present invention thus deals with a problematic waste stream such as waste rubber tires, which is used as the raw material in a process for converting it into bifunctional molecules, which in their turn can be used as a precursor or intermediate compound in the production of renewable condensation polymers, such as polyesters. The present invention thus provides a sustainable green recycling pathway for (waste) rubber composite materials, such as ground tire rubber.

An aspect of the present invention provides a method for processing a rubber composite material, wherein the rubber composite material comprises vulcanized rubber polymers and a filler material, wherein the method comprises the steps of:
(i) providing the rubber composite material;
(ii) contacting the rubber composite material with a solvent, thereby obtaining solvent swollen rubber composite material;
(iii) contacting the solvent swollen rubber composite material with ozone, thereby obtaining solubilized reaction products in the solvent and a solid residue;
(iv) separating the solubilized reaction products from the solid residue;
(v) reacting the solubilized reaction products with water or an aqueous composition comprising between 98% and 100 % (w/w) of water, an organic base, an oxygen scavenger or a metal-based heterogeneous catalyst, thereby obtaining bifunctional oxygen-containing compounds; and, particularly, recovering the filler material from the solid residue.

In particular, the rubber composite material is rubber tire material, particularly waste rubber tire material. In particular, the filler material comprises carbon black and/or metal oxides, which are recovered in step (v).

In particular embodiments, the rubber composite material has been subject to a physical size reduction step prior to or during step (i), thereby obtaining rubber composite material fragments or rubber granulates, particularly having a size between 0.05 and 250 mm, as determined by sieve analysis.

In particular embodiments, step (ii) comprises preparing a dispersion of the rubber composite material in the solvent, particularly at a concentration of between 1 and 500 g of rubber composite material per litre solvent.

In particular embodiments, the solvent is a hydrocarbon, acetonitrile, an organic acid or an alcohol, or mixtures thereof, or a mixture of a hydrocarbon, acetonitrile and/or an acid/alcohol, and water. The hydrocarbon is particularly a saturated and/or halogenated aliphatic hydrocarbon.

In particular embodiments, step (iii) comprises contacting the solvent swollen rubber composite material with a gaseous oxygen containing stream comprising ozone, particularly a gaseous oxygen containing stream comprising between 1 and 20 vol% of ozone; and/or contacting the solvent swollen rubber composite material with an ozone saturated solvent.

In particular, step (iii) is performed at a pH ranging between pH 1.0 and pH 7.0.

Step (iii) may be performed at a temperature between -50°C and 100°C, particularly at a temperature between -40°C and 40°C or between 0°C and 25°C, and at atmospheric pressure or higher. Furthermore, step (iii) may be performed for a time sufficient to solubilize at least 35% of the rubber polymers in the rubber composite material, particularly to solubilize at least 50% of the rubber polymers in the rubber composite material, more particularly to solubilize at least 75% of the rubber polymers in the rubber composite material, even more particularly to solubilize at least 90% of the rubber polymers in the rubber composite material. Also, in step (iii), the molecular mass of the solubilized reaction products can be controlled by controlling the time of contacting the solvent swollen rubber composite material with ozone.

In particular embodiments, step (v) comprises:
(a) reacting the soluble reaction products with an aqueous composition comprising between 98% and 100% (w/w) of water, such as water or steam, particularly at a temperature between 80°C and 150°C or under reflux conditions, thereby obtaining bifunctional carboxylic acids or bifunctional carboxylic acid/keto compounds; or
(b) reacting the soluble reaction products with an organic base, particularly at a temperature ranging between 0°C and 50°C, thereby obtaining bifunctional carboxylic acids and aldehydes.

In addition, step (v) may further comprise removing or inactivating excess ozone prior to reacting the solubilized reaction products with water, an organic base or N-oxide thereof, an oxygen scavenger or a metal-based heterogeneous catalyst.

In particular embodiments, step (v) further comprises the step of recovering or isolating at least one bifunctional oxygen-containing compound. In particular embodiments, step (v) comprises the step of recovering or isolating one or more of 4-oxopentanoic acid, 4-oxopentanal, succinic acid or succinic acid anhydride. In particular embodiments, step (v) comprises the step of recovering or isolating at least one bifunctional oxygen-containing compound with molecular mass of at least 100 g/mol, such as between 100 g/mol and 20000 g/mol or between 200 g/mol and 20000 g/mol, particularly between 500 g/mol and 10000 g/mol or between 1000 g/mol and 10000 g/mol, more particularly between 2000 g/mol and 8000 g/mol or between 4000 g/mol and 8000 g/mol.

In particular embodiments, step (iii) and step (iv) are performed essentially simultaneously, such as wherein the rubber composite material forms a packed bed of a trickle bed type reactor.

In particular embodiments, the separation of the solubilized reaction products in the solvent from the solid residue in step (iv) is performed by filtration, centrifugation or decantation.

### Description of the Figures

Figure 1 schematically shows an embodiment of a trickle-bed reactor setup for contacting the waste rubber composite material with ozone.
Figure 2 shows the GC-MS chromatogram of the products obtained following the hydrolytic (FIG 2A) and organic base (FIG 2B) work-up following ozone treatment of the waste rubber composite material.

### Detailed description of invention

Before the present system and method of the invention are described, it is to be understood that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or openended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

In the present description of the invention, reference is made to the accompanying drawings that form a part hereof, and in which are shown by way of illustration only of specific embodiments in which the invention may be practiced. It is to be understood that other embodiments may be utilised, and structural or logical changes may be made without departing from the scope of the present invention. The following detailed description, therefore, is not to be taken in a limiting sense, and the scope of the present invention is defined by the appended claims.

The inventors have developed improved methods for the processing and recycling of rubber composite materials comprising vulcanized rubber polymers and filler materials, particularly waste rubber composite materials, including but not limited to used vehicle tires. The methods involve the conversion of the rubber component of rubber composite material into bifunctional oxygen containing compounds of different molecular weight by contacting the rubber composite material, typically in swollen form following its impregnation in a suitable solvent, with ozone and separating the solubilized reaction products from the filler material. Advantageously, the methods according to the present invention do not require the removal of the filler material prior to the ozone treatment. The methods according to the present invention further allow the simultaneous separation and subsequent recovery of the filler materials for their reuse/recycling.

Without wishing to be bound by theory, ozone selectively oxidizes the C=C double bonds in the rubber polymers, thereby fragmentizing and solubilizing the rubber polymers, and, following a suitable work-up of the solubilized reaction products, resulting in bifunctional molecules comprising oxygen containing functional groups, particularly end-standing oxygen containing functional groups, such as carboxylic acid, ketone, alcohol or aldehyde functional groups. In certain embodiments, advantageously, ozone also oxidizes the sulphur present in the vulcanized rubber, particularly into SO₂ and SO₃, thus allowing to separate the sulphur present in the vulcanized rubber from the bifunctional molecules generated by the ozone treatment and the remaining filler material.

Accordingly, an aspect of the present invention provides a method for the conversion or processing of a rubber composite material, wherein the rubber composite material comprises vulcanized rubber polymers and a filler material and wherein the method comprises the ozone mediated oxidation of the rubber composite material in a solvent. In particular embodiments, the method comprises the steps of:
- contacting the rubber composite material with a solvent, thereby obtaining solvent swollen rubber composite material;
- contacting the solvent swollen rubber composite material with ozone, thereby obtaining solubilized reaction products in the solvent and a solid residue;
- separating the solubilized reaction products from the solid residue; and
- reacting the solubilized reaction products with an aqueous composition comprising between 98% and 100% (w/w) of water, an organic base or an N-oxide thereof, an oxygen scavenger or a metal-based heterogeneous catalyst, thereby obtaining bifunctional oxygen-containing compounds; and/or recovering the filler material from the solid residue.

Accordingly, methods are provided which optionally comprise the step of providing a rubber composite material and performing the method steps as detailed above.

As envisaged herein, the rubber composite material generally comprises a rubber component and a filler material embedded in the rubber component. The rubber component comprises vulcanized rubber polymers.

The rubber type and corresponding rubber polymers are not particularly limited, as both natural and synthetic rubbers can be vulcanized and treated by ozone. Natural rubbers are obtained from the rubber tree, whereas synthetic rubbers are polymers that are synthesized from petroleum-based products. In particular embodiments, the rubber component comprises natural rubber or isoprene rubber, styrene-butadiene rubber, butadiene rubber. The rubber polymers may be polyisoprene, polybutadiene, or copolymers of butadiene, such as butadiene-styrene copolymer. Advantageously, the monomers or repeating units making up polyisoprene (natural rubber or isoprene rubber), polybutadiene (butadiene rubber) and styrene-butadiene copolymer (styrene-butadiene rubber) all comprise a C=C double bond, which can be oxidized by ozone. Rubber polymers comprising a lower ratio of unsaturated monomers or repeating units may also be subject to the methods according to the present invention, but this is less preferred. In the vulcanization process, generally, the rubber polymers are blended with sulphur followed by a heat and pressure treatment, which forms C-[S]ₙ-C bonds between the rubber polymer chains at the carbons in the alpha position with respect to the double bonds. It is understood that the vulcanized rubber polymers may contain an unvulcanised or insufficiently vulcanized fraction.

Typical filler material in the rubber composite materials envisaged herein include, but are not limited to, carbon black, silica, clay, talc, calcium carbonate and metal oxides, such as zinc oxide an iron oxide.

The rubber composite material as envisaged herein may further comprise reinforcing material, such as steel wiring, natural fibers, such as cotton or silk, or synthetic fibers, such as nylon, aramid, polyester, rayon or kevlar.

In particular embodiments, the rubber composite material is a waste rubber composite material. The present invention is particularly suited to convert end-of-life rubber composite materials or any other type of waste rubber composite materials into valuable bifunctional molecules, and to recover the filler material therefrom. In particular embodiments of the methods of the invention the reaction products obtained by are bifunctional and oxygenated in nature and no residual rubber structure is left.

Examples of the rubber composite material as envisaged herein, include worn-out or old tires, hoses and conveyer belts. In particular embodiments, the rubber composite material comprises waste tires, including but not limited to vehicle tires, such as tires for cars, trucks and the like. A tire is made up of a rubber composite material, comprising vulcanized rubber polymers, filler material and reinforcing material, wherein the rubber polymers are a mixture of synthetic and natural rubber polymers, wherein the filler material comprises carbon black, and wherein the reinforcing material includes steel wiring, and/or natural or synthetic fibers.

Advantageously, the rubber composite material is subject to a pretreatment step, such as prior to or during step (i) according to certain embodiments of the methods envisaged herein. For instance, prior to contacting the rubber composite material with the solvent, it may be cleaned. This may be particularly beneficial for waste materials which are often contaminated with dirt and dust.

In particular embodiments, the rubber composite material as envisaged herein is subject to a mechanical size reduction step, such as by shredding or any other known method in the art, thereby creating rubber composite material fragments or a rubber composite granulate. This facilitates the impregnation and swelling of the rubber composite material with the solvent, such as in step (ii) of the methods envisaged herein. Smaller fragments or a finer granulate also facilitate and improve the reaction kinetics of the reaction with ozone in step (iii) of the methods envisaged herein. In certain embodiments, the rubber composite material fragments or granulate have a size of at least 0.05 mm, particularly between 0.05 and 250 mm, particularly between 0.05 and 150 or between 0.1 and 100 mm, as determined by sieve analysis.

Optionally, the reinforcing materials may be removed from the rubber composite material fragments or granulate by known methods. For instance, steel wiring may be magnetically removed.

In the methods as envisaged herein, such as in step (ii) of certain embodiments, the rubber composite material, particularly the rubber composite material fragments or granulate, is contacted or impregnated with a solvent, thereby obtaining solvent swollen rubber composite material, to facilitate the subsequent reaction with ozone.

The solvent is typically in liquid form under the conditions of step (ii) and/or step (iii) of the methods as envisaged herein. The solvent may be chosen for its capacity to swell the rubber composite material, in particular the vulcanized rubber component thereof, and for its capacity to dissolve ozone and/or the reaction products obtained after the ozone treatment of the swollen rubber polymers. The solvent is preferably one which does not react readily with ozone, in particular a solvent which does not degrade irreversibly or otherwise adversely react with ozone. It is understood that in case the solvent reacts to some extent with ozone, this reaction occurs at a significantly reduced rate compared to the reaction between ozone and the rubber polymers, such as at a rate of less than 1%, less than 0.5%, or even less than 0.1% or 0.01% of the reaction rate between ozone and the rubber polymers.

In certain embodiments, the solvent is an organic solvent, such as a hydrocarbon, an organic acid, an alcohol, acetonitrile, or mixtures thereof. The solvent may also comprise water, particularly upto 10 vol%, which may promote and facilitate the hydrolytic or oxidative work-up of the reaction products obtained after the ozone treatment of the swollen rubber polymers, and which may, in certain embodiments, also take up the generated SO₂ or SO₃ resulting from the oxidation of the sulphur in the vulcanized rubber polymers. In preferred embodiments, the hydrocarbon is a saturated and/or halogenated aliphatic hydrocarbon. Specific examples of the hydrocarbon include pentane, hexane, heptane, methylene chloride, chloroform, tetrachloromethane, or tetrachloroethane. In certain embodiments, the alcohol is methanol, ethanol or propanol.

In particular embodiments, the solvent has a neutral or acidic pH. In particular embodiments, the solvent does not comprise an alkaline compound. More in particular, the solvent does not comprise an alkali hydroxide, an earth alkali hydroxide or ammonium hydroxide.

In particular embodiments, the solvent impregnation step of contacting the rubber composite material or fragments thereof with the solvent comprises preparing a dispersion of the rubber composite material or the fragments or granulate thereof in the solvent, particularly at a concentration of between 1 and 500 g of rubber composite material per litre solvent, such as at a concentration of between 1 and 250 g or between 1 and 100 g of rubber composite material per litre solvent.

In certain embodiments, the rubber composite material or fragments thereof form a packed bed in a reaction vessel or chemical reactor, such as a packed bed or trickle-bed type reactor. Advantageously, in such setup, the solvent may be contacted with the rubber composite material or fragments thereof by passing the solvent through the packed bed.

In the methods as envisaged herein, such as in step (iii) of certain embodiments, the solvent swollen rubber composite material, particularly the solvent swollen rubber composite material fragments or granulate, is contacted and allowed to react with ozone, thereby obtaining solubilized reaction products in the solvent and a solid residue.

In certain embodiments, the solvent swollen rubber composite material is contacted with a gaseous oxygen containing stream comprising ozone, particularly a gaseous oxygen containing stream comprising between 0.5 and 20 vol% of ozone, such as between 1 and 15 vol% of ozone. More in particular, the gaseous ozone containing stream is passed through the dispersion of the swollen rubber composite material or the fragments or granulate thereof in the solvent. In certain embodiments, the treatment with ozone generates SO₂ or SO₃ resulting from the oxidation of the sulphur in the vulcanized rubber polymers. In this case, advantageously, the gaseous stream exiting the dispersion may contribute to removing the generated SO₂ or SO₃. The sulphur of the vulcanized rubber polymers that has not been oxidized by ozone is recovered in the solid residue.

In certain other embodiments, the solvent swollen rubber composite material is contacted with an ozone saturated solvent. In particular embodiments, the rubber composite material or fragments thereof form a packed bed in a reaction vessel or chemical reactor, such as in a packed bed or trickle-bed type reactor, and the ozone saturated solvent is passed through the packed bed.

The ozone may be generated by any suitable ozone generator from pure oxygen or from an oxygen containing gas mixture, such as air or oxygen-enriched air.

The ozone treatment step is particularly performed at a temperature, specifically a solvent temperature, between -50°C and 100°C, particularly at a temperature between -40°C and 40°C or between -30°C and 30°C, such as between 0°C and 25°C. Conveniently, the ozone treatment can be carried out at ambient temperature conditions, typically ranging from 15 to 25°C.

The ozone treatment step is particularly performed at atmospheric pressure or higher.

The ozone treatment step is particularly performed at neutral or acidic pH, such as at a pH between 1 and 7 or between 3 and 7. For instance, in case the solvent comprises an alcohol, such as methanol, some of the alcohol gets oxidized to the corresponding carboxylic acid (e.g. formic acid). Also, as indicated above, the solvent may be or may comprise an organic acid. Carboxylic acids may also be generated during ozone treatment. In certain embodiments, the treatment with ozone generates SO₂ or SO₃ and in case the solvent comprises water, the generated SO₂ and SO₃ during ozone treatment also generates acidity, and particularly results in a composition typically having a pH between 1 and 4. In particular embodiments, the ozone treatment step is carried out in the absence of an alkaline compound, particularly in the absence of an alkali hydroxide, an earth alkali hydroxide or ammonium hydroxide, such as by performing step the ozone treatment step in a solvent which does not comprise such alkaline compound.

The reaction time of the ozone with the rubber polymers can vary over a wide range, from several minutes to a period of multiple hours, typically depending on the flow rate of the ozone containing gas mixture or ozone saturated solvent and the concentration of ozone therein, and/or the particle size of the rubber fragments or rubber granulate. In addition, the molecular mass of the solubilized reaction products can be controlled by controlling the reaction time, i.e. the time of contacting the solvent swollen rubber composite material and/or the solubilized reaction products with ozone. This degree of freedom allows for a controlled synthesis of a wide variety of molecules.

In certain embodiments, the ozone treatment step is performed for a time sufficient to solubilize at least 35% of the rubber polymers in the rubber composite material, particularly to solubilize at least 50% of the rubber polymers in the rubber composite material, more particularly to solubilize at least 75% of the rubber polymers in the rubber composite material, even more particularly to solubilize at least 90% or at least 95% of the rubber polymers in the rubber composite material.

In the methods as envisaged herein, such as in step (iv) of certain embodiments, the solvent containing the solubilized reaction products is separated from the solid residue. This may be performed by ordinary separation means, known in the art, such as by filtration, membrane separation, sedimentation, hydrocyclonic separation, centrifugation or decantation.

Advantageously, in the particular embodiment wherein the rubber composite material or fragments thereof form a packed bed in a reaction vessel or chemical reactor, such as in a packed bed or trickle-bed type reactor, the ozone treatment step and the separation step are performed essentially simultaneously. Indeed, the ozone saturated solvent generates and solubilizes reaction products which are carried out of the packed bed by the solvent flow.

When the ozone treatment has been terminated, such as in step (v) of certain embodiments, either or both the solubilized reaction products and the solid residue are further treated to obtain and/or recover desired products and compounds. Typically, prior to this further treatment, any excess ozone is removed or inactivated.

More in particular, the solubilized reaction products are subject to a work-up treatment, wherein the solubilized reaction products are reacted with an aqueous composition comprising between 98% and 100% (w/w) of water, an organic base or an N-oxide thereof, an oxygen scavenger, or a metal-based heterogeneous catalyst, thereby obtaining bifunctional oxygen-containing compounds, particularly bifunctional compounds comprising end-standing oxygen-containing functional groups, such as a carboxyl, an aldehyde or ketone or an alcohol functional moiety. Examples of an oxygen scavenger for the work-up treatment include dimethyl sulfide, triphenyl phosphite, triethyl phosphite, which may be immobilized on a suitable carrier. Examples of the metal-based catalyst include zinc-, iron- or copper-based catalysts. The solubilized reaction products may also be subject to an electrochemical reduction, wherein the solubilized reaction products are subject to an electric current in an organic or aqueous solvent, particularly in the presence of a suitable electrolyte, thereby obtaining bifunctional oxygen-containing compounds with aldehyde, ketone and/or alcohol functional moieties.

In particularly preferred embodiments, the solubilized products are subject to a hydrolytic work-up treatment, wherein the solubilized reaction products are reacted with an aqueous composition comprising between 98% and 100% (w/w) of water, particularly comprising between 99% and 100% (w/w) of water, such as distilled water or steam, thereby obtaining bifunctional carboxylic acids. The hydrolytic work-up is preferentially performed at a temperature between 80°C and 150°C or under reflux conditions, thereby obtaining bifunctional carboxylic acids. Advantageously, the solvent used to swell the rubber composite material is removed in this process and replaced by water.

In other embodiments, the solubilized products are subject to an organic base work-up treatment, wherein the solubilized reaction products are reacted with an organic base or an N-oxide thereof, such as a composition comprising between 98% and 100% (w/w), or between 99% and 100% (w/w) of the organic base or an N-oxide thereof, thereby obtaining bifunctional carboxylic acids and aldehydes. The organic base work-up is preferentially performed at a temperature between 0°C and 50°C. Suitable organic bases include triethylamine, diethylamine, N-ethylmorpholine and pyridine.

Advantageously, the work-up treatment of step (v) does not require the use of hydrogen peroxide or another oxidizing agent. It has been found that only using distilled water or only using an organic base result in bifunctional oxygen-containing compounds. Accordingly, in particular embodiments, step (v) is performed without hydrogen peroxide or another oxidizing agent or in the presence of trace amounts of hydrogen peroxide, such as less than 2% (w/w), particularly less than 1% or less than 0.5% (w/w), more particularly less than 0.1% (w/w) or less than 0.01% (w/w) of hydrogen peroxide.

In particular embodiments, the methods as envisaged herein further comprise the step of recovering or isolating at least one bifunctional oxygen-containing compound, particularly at least one bifunctional compound comprising end-standing oxygen-containing functional groups, such as a carboxyl, an aldehyde or ketone, or an alcohol functional moiety. In particular embodiments, the methods as envisaged herein further comprise the step of recovering or isolating one or more of 4-oxopentanoic acid, 4-oxopentanal, succinic acid or succinic acid anhydride. In particular embodiments, the methods as envisaged herein further comprise the step of recovering or isolating at least one bifunctional oxygen-containing compound with molecular mass of at least 100 g/mol, such as between 100 g/mol or 20000 g/mol or between 200 g/mol and 20000 g/mol. More in particular, the methods as envisaged herein may further comprise the step of recovering or isolating at least one bifunctional oxygen-containing compound with molecular mass between 500 g/mol and 10000 g/mol or between 1000 g/mol and 8000 g/mol, even more in particular with molecular mass between 2000 g/mol and 8000 g/mol or between 4000 g/mol and 8000 g/mol.

Advantageously, these bifunctional products can be used as a precursor or intermediate in the production of polymers, such as polyesters.

In addition, the methods as envisaged herein further comprises the step of recovering the filler material as described elsewhere herein from the solid residue. In particular embodiments, the methods as envisaged herein further comprises the step of recovering carbon black and/or metal oxides, such as zinc oxide or iron oxide, from the solid residue, such as by washing the solid residue with a suitable liquid to remove unreacted rubber polymers and/or residual solubilized reaction products, and/or by drying to remove the solvent or washing liquid. In certain embodiments, the unreacted sulphur in the vulcanized rubber polymers after the treatment with ozone is recovered in the solid residue.

The present invention further provides a system for the conversion of a rubber composite material, adapted to perform a method according to the present invention, and comprising a reaction vessel adapted for holding the rubber composite material. The reaction vessel may be equipped with heating and/or cooling means, and/or other standard chemical process equipment, such as mixing or stirring means, temperature and pressure sensors, valves for controlling the input and output flows, and the like.

In particular embodiments, the system comprises a reaction vessel for holding a dispersion of the rubber composite material in a solvent, and a means for providing an ozone-containing gas to the reaction vessel, such as a sparger.

Alternatively, in further particular embodiments, the system comprises a reaction vessel adapted for holding a packed bed of the rubber composite material, and a means for providing ozone, particularly as an ozone saturated solvent, to the packed bed of the rubber composite material.

The system as envisaged herein may be operated in batch or in a continuous manner.

### Examples

### Materials and methods used in Examples 1 - 4

Ozone was produced with a Purusaqua O3-5000B koi pond ozone generator. Oxygen (99.995%, obtained from Air Liquide) is passed through the generator at a flow rate of 0.94 L/min and pressure just above atmospheric pressure, generating an ozone flow of 0.8 mmol/min, as measured with a UV-ozone analyzer.

Ground tire rubber was obtained from Pelt Recycling Belgium in a 0.5 - 1.0 mm mesh size. The ground rubber was further cryogenically powdered in-house using a Fritsch Pulverisette 14 equipped with a 0.3 mm mesh size sieve ring.

Oxygen (>99.5%; Air Liquide), methylene chloride (>99,8%; Fischer Scientific), ethanol (>99.8%, Acros Organics), potassium iodide (99%; Acros Organics) and triethylamine (99%; Acros Organics) were used for synthesis.

A Bruker alpha II FTIR spectrometer equipped with a diamond crystal was used for FTIR analysis. Gel Permeation Chromatography (GPC) was performed on an Agilent Technologies 1100 series HPLC, equipped with Phenogel 5 µm 50 Å and 5 µm 100 Å columns and RID detector, as well as on an Agilent Technologies Infinity 1260 series HPLC equipped with Phenogel 5µm 10³ Å and 5µm 10⁶ Å columns and RID detector. The eluent in both cases was tetrahydrofuran (>99%, stabilized with BHT; Sigma Aldrich). The eluent was also used to dilute the samples to 0.05 m% after which they were filtered through a 0.45 µm PTFE syringe filter and eluted isocratically at 1 mL/min for 30 min.

An Agilent 1260 Infinity II HPLC system, equipped with an ELSD was used for normal-phase elution using a nucleosil 100-5-OH diol-modified column (Machery-Nagel). The eluent had a gradient ranging from methylene chloride (HPLC grade; Chem-Lab) (spiked with 0.15% formic acid (99%+; Fischer Scientific) initially to pure methanol (HPLC grade; Chem-Lab) until all components were eluted of the column. After the column was flushed with 100% methanol, some signals were obtained due to solvent loading. These were ignored as they did not overlap with any product of interest. The samples were dissolved in a 50/50 methanol/DCM solvent mixture (0.1 m%).

A Shimadzu GC-2010 gas chromatograph equipped with a Shimadzu QP2010S mass spectrometer and Phenomenex Zebron ZB-5ms column was used for GC-MS analysis.

Thermogravimetric analysis was performed on a TA Instruments TGA Q5000 using Platinum - HT type pans. The product was initially heated up under inert atmosphere (nitrogen; Air Liquide; 99.999%) from 50 to 600 °C to pyrolyze any organic carbon. Then, the oven was cooled to 300 °C, followed by the switching from nitrogen to air atmosphere. The product was then heated again until 800 °C to oxidize any formed pyrolytic carbon as well as any already present graphitic carbon to carbon black.

ICP-MS analysis was performed on an Agilent 7500 series ICP-MS. 100 mg samples were destructed in 1 mL aqua regia (3:1 HCl:HNO₃) overnight at 60 °C, further diluted to 10 mL, filtered with a 0,2 micron PTFE filter and finally diluted again 10x with 1% HNO₃-solution. Yttrium was used as an internal standard.

### Example 1 - Carboxylic acid synthesis from ground tire rubber (hydrolytic work up)

The experimental setup comprised a magnetic stirrer-equipped round bottom flask with a distillation adapter attached through which a gas dispersion tube was introduced. The outlet of the adapter was attached to a silicone hose which exhausts into the back of a fume hood. The setup was cooled in an acetone-dry ice bath. In case the reaction took longer than 8 hours, the mixture was stored overnight in the freezer at -20 °C.

An amount of ground tire rubber was brought into suspension in methylene chloride (DCM) (or a mixture of 10 v% ethanol/methylene chloride) at a concentration of approximately 14 g rubber per litre solvent and left to swell overnight prior to the reaction. An oxygen stream containing approximately 3 vol% ozone was bubbled through the heterogeneous mixture at a rate of approximately 0.94 litre per minute (= 0.8 mmol O₃/min) and at a temperature of -40 °C for an average time of 2.8 hours per gram of rubber. Afterwards, the residual ozone was purged from the reaction mixture with oxygen for 5-10 minutes. The flask was taken from the acetone-dry ice bath and left stoppered to warm up to room temperature.

The ozone treated reaction mixture was left to stand. Any residual rubber could be seen floating on the surface, while the released carbon black settled on the bottom. The mixture was filtered *in vacuo* over a thermo-fisher 0.45 µm PTFE-membrane filter using a membrane filtration apparatus. The residue was washed multiple times with methylene chloride and finally with water and was further analysed (see Example 4). The methylene chloride (and in some cases ethanol) in the filtrate was removed by distillation and distilled water was added little by little until the original volume of methylene chloride was replaced by water (also referred to as "hydrolytic workup"). Next, the setup was reconfigured into a reflux setup and heating was continued. The reaction progress was monitored by mixing a few drops of the reaction mixture with a potassium iodide solution. Acidification was not required as the reaction mixture already had an acidic pH. When iodine was no longer released, absence of ozonides or peroxides was confirmed. Next, the heating of the reaction mixture was stopped and the reflux discontinued. Following a further concentration *in vacuo* a heterogeneous crude mixture was obtained essentially consisting of a brown viscous syrup containing some small crystals.

The reaction taking place during the ozone treatment and further processing (hydrolytic workup) is schematically represented by the following reaction scheme:

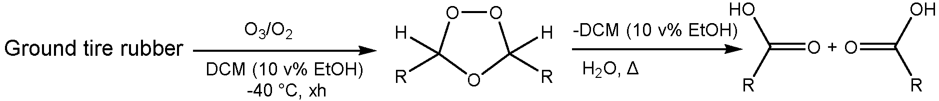

The reaction was performed multiple times on different scales (1 and 5 g) ground tire rubber in methylene chloride and methylene chloride with 10 v% ethanol. The results are summarized in Table 1 and 2. On average 59 ±4 m% crude product (with respect to the initial mass of tire rubber) and 50 ±6 m% residue was obtained in methylene chloride and 76 ±9 m% product (with respect to the initial mass of tire rubber) and 46 ±18 m% residue was obtained in methylene chloride with 10 v% ethanol.

**Table 1. Carboxylic acid synthesis in DCM as solvent.**

| starting mass rubber (g) | Mass crude product (g) | Mass Residue (g) | Summary of reaction conditions | Time (h) |
|---|---|---|---|---|
| 5.19 | 2.9639 | 3.1153 | DCM, -40 °C, hydrolytic work-up | 14.25 |
| 4.998 | 2.5437 | 2.9571 | DCM, -40 °C, hydrolytic work-up | 14 |
| 1.0109 | 0.6038 | 0.5395 | DCM, -40 °C, hydrolytic work-up | 3 |
| 1.1127 | 0.6759 | 0.5044 | DCM, -40 °C, hydrolytic work-up | 3 |
| 1.0062 | 0.6017 | 0.4858 | DCM, -40 °C, hydrolytic work-up | 3 |
| 1.0500 | 0.6624 | 0.5545 | DCM, -40 °C, hydrolytic work-up | 3 |
| 1.0286 | 0.6166 | 0.4240 | DCM, -40 °C, hydrolytic work-up | 3 |

**Table 2. Carboxylic acid synthesis in DCM/Ethanol (10%) mixture as solvent.**

| starting mass rubber (g) | Mass crude product (g) | Mass Residue (g) | Summary of reaction conditions | Time (h) |
|---|---|---|---|---|
| 1.182 | 0.8814 | 0.3999 | DCM/10% EtOH, -40 °C, hydrolytic work-up | 3 |
| 5.122 | 4.5041 | 1.7231 | DCM/10% EtOH, -40 °C, hydrolytic work-up | 14 |
| 5.7103 | 4.4994 | 2.2014 | DCM/10% EtOH, -40 °C, hydrolytic work-up | 14.2 |
| 5.6146 | 3.5726 | 2.6834 | DCM/10% EtOH, -40 °C, hydrolytic work-up | 14 |
| 1.0861 | 0.8122 | 0.5385 | DCM/10% EtOH, -40 °C, hydrolytic work-up | 3 |
| 1.0351 | 0.8258 | 0.5269 | DCM/10% EtOH, -40 °C, hydrolytic work-up | 3 |
| 1.0467 | 0.8113 | 0.5291 | DCM/10% EtOH, -40 °C, hydrolytic work-up | 3 |
| 1.0516 | 0.7481 | 0.5831 | DCM/10% EtOH, -40 °C, hydrolytic work-up | 3 |
| 0.9959 | 0.7631 | 0.4773 | DCM/10% EtOH, -40 °C, hydrolytic work-up | 3 |

FTIR spectra were recorded for the rubber material before ozone treatment, for the recovered residue and for the obtained crude reaction product after hydrolytic work-up. A clear change was be observed between the starting material and the obtained reaction products. The starting rubber exhibited a rising baseline which is characteristic for the absorbance of carbon black throughout the IR wavelength spectrum. In addition, a strong doublet was observed at 2921 and 2858 cm⁻¹, which is due to long paraffinic oils present in the rubber structure which bloom to the surface over time. Any other peaks are difficult to distinguish with certainty due to low intensity as well as due to the overall baseline shift. The crude product showed an asymmetrical peak at 1682 cm⁻¹, indicating the presence of various carbonyl groups (ketone and carboxylic acid). This was further supported by the peaks visible at 1409 cm⁻¹ (C-H bend adjacent to carbonyl; methylene ketone), 1305 cm⁻¹ (carboxylate C-O stretch) and the broad peak between 2800 and 3400 cm⁻¹ (O-H stretch in carboxylic acids). Finally, the obtained residue exhibited a shifted baseline, with little if any peaks, similar to that of carbon black due to the absorbance throughout the IR spectrum.

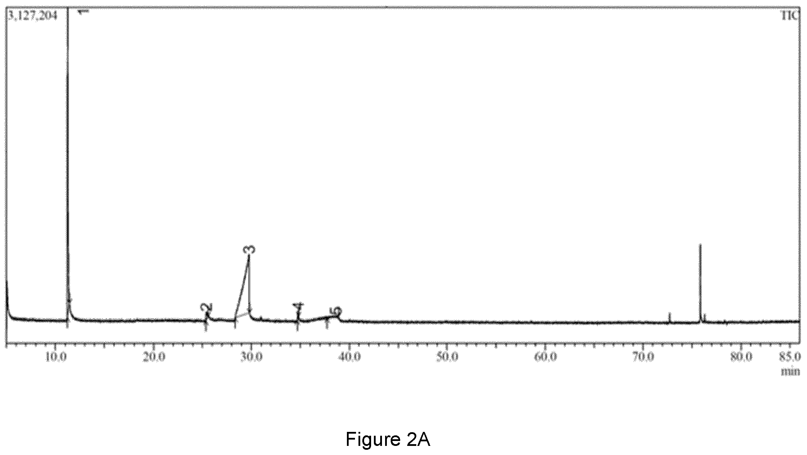

The crude product mixtures were further analysed by GC-MS. The GC-MS chromatogram of the products obtained for the hydrolytic workup is shown in Figure 2A. It is possible that due to the injector temperature thermally labile compounds decomposed before being analysed. The results of the GC-MS chromatogram are summarized in Table 3.

The main products are succinic acid (peak 5) (or its anhydride - peak 2 - due to the high temperature of the injector) and levulinic acid (or 4-oxopentanoic acid) (peak 3). Due to a different response in positive ion MS for succinic acid compared to levulinic acid, quantification of the obtained products by GC-MS was not possible.

**Table 3**

| Peak# | R.Time | Area | Area% | A/H | Name |
|---|---|---|---|---|---|
| 1 | 11.26 | 12678601 | 35.75 | 4.42 | 2-pentanone, 4-hydroxy-4-methyl |
| 2 | 25.40 | 514984 | 1.45 | 6.95 | Succinic anhydride |
| 3 | 29.77 | 21621191 | 60.96 | 39.49 | Pentanoic acid, 4-oxo |
| 4 | 34.78 | 249185 | 0.7 | 3.85 | |
| 5 | 38.63 | 404692 | 1.14 | 26.96 | Butanedioic acid |

Quantification of the products in the crude mixture was performed on normal phase HPLC with a diol-modified silica column with a DAD detector. Elution was done with a gradient running from pure methylene chloride (spiked with 0.15 v% formic acid) to pure methanol. A calibration curve was composed for levulinic (Rt=9.56 min) and succinic acid (Rt= 18.25 min). An average of 75 m% levulinic acid was determined over 4 different reaction samples.

### Example 2 - Carboxylic acid and aldehyde synthesis from ground tire rubber (organic base work up)

The experimental setup was the same as for Example 1.

An amount of ground tire rubber was brought into suspension in methylene chloride (or a mixture of 10 v% ethanol/methylene chloride) at a concentration of approximately 14 g rubber per liter solvent and left to swell overnight prior to the reaction. An oxygen stream containing approximately 3% ozone by weight was bubbled through the heterogeneous mixture at a rate of approximately 0.94 liter per minute (= 0.8 mmol O₃/min) and at a temperature of -40 °C for an average time of 2.8 hours per gram of rubber. Afterwards, the residual ozone was purged from the reaction mixture with oxygen for 5-10 minutes. The flask was taken from the acetone-dry ice bath and left stoppered to warm up to room temperature.

The ozone treated reaction mixture was left to stand. Residual rubber could be seen floating on the surface, while the released carbon black settled on the bottom. The mixture was filtered *in vacuo* over a thermo-fisher 0.45 µm PTFE-membrane filter using a membrane filtration apparatus. The residue was washed multiple times with methylene chloride and further analysed (see Example 4). Triethylamine (99%;) was added dropwise to the filtrate under stirring.

The reaction progress was monitored by mixing a few drops of the reaction mixture with a potassium iodide solution. When iodine was no longer released, the mixture was further concentrated *in vacuo* resulting in a heterogeneous crude mixture essentially consisting of a brown viscous syrup containing some small crystals, part of which are triethylamine n-oxide crystals. This resulted in a much higher amount of the crude product mass much higher (195% as compared to the mass obtained from the hydrolytic work-up of example 1).

The reaction taking place during the ozone treatment and further processing is schematically represented by the following reaction scheme:

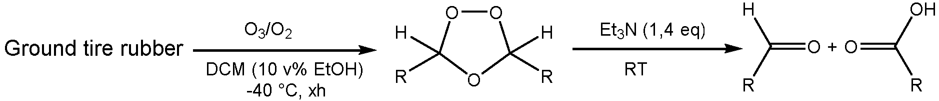

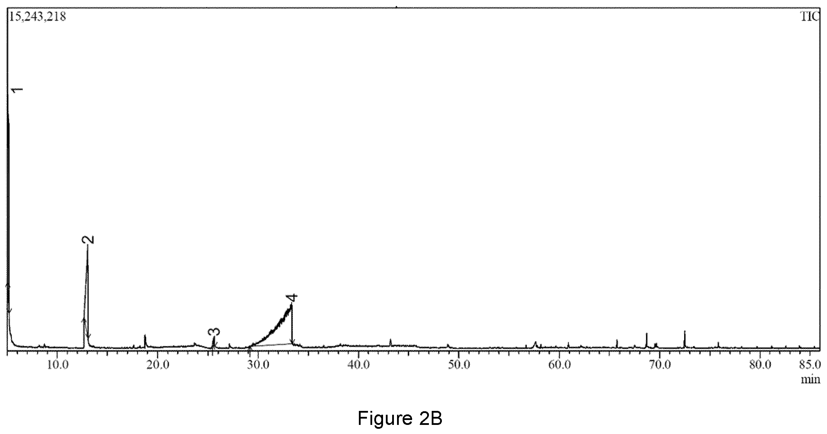

The crude product mixtures were further analysed by GC-MS. The GC-MS chromatogram of the products obtained for the triethylamine (organic base) workup is shown in Figure 2B. It is possible that due to the injector temperature thermally labile compounds decomposed before being analyzed. The results of the GC-MS chromatogram are summarized in Table 4.

**Table 4**

| Peak# | R.Time | Area | Area% | A/H | Name |
|---|---|---|---|---|---|
| 1 | 5.07 | 68535007 | 24.88 | 7.97 | Triethylamine |
| 2 | 13.04 | 46146752 | 16.75 | 11.29 | Pentanal, 4-oxo |
| 3 | 25.56 | 2258650 | 0.82 | 5.65 | Succinic anhydride |
| 4 | 33.34 | 158483984 | 57.54 | 87.04 | Pentanoic acid, 4-oxo- |

The main products are succinic acid anhydride (peak 3) and levulinic acid (or 4-oxopentanoic acid) (peak 4). The aldehyde of levulinic acid (4-oxopentanal) was also recovered (peak 2). Due to a different response in positive ion MS for succinic acid compared to levulinic acid, quantification of the obtained products by GC-MS was not possible. The 'lag' in retention time of levulinic acid in Figure 2B is believed to be due to interactions with triethylamine causing peak widening.

### Example 3 - Long-chain oligomer synthesis from ground tire rubber

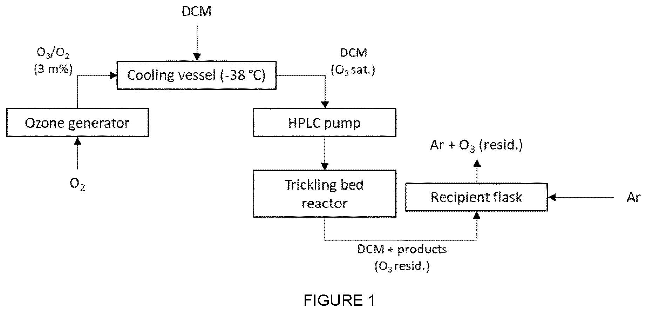

The experimental setup of example 3 is illustrated in Figure 1.

An amount of ground rubber (0.1 g) was brought into an empty flash chromatography cartridge (4 g cartridge, Macherey-Nagel) and filled with methylene chloride to swell over 2 days. A 500 mL double-walled reaction vessel filled with methylene chloride was cooled to - 38 °C and an oxygen stream containing approximately 3% ozone by weight was bubbled through until the solution turned deep blue indicating saturation. The ozone-saturated methylene chloride solution was pumped through the flash cartridge in a flow direction in line with gravity, making it a trickle-bed reactor. The outgoing flow of the trickle-bed reactor was collected in a stirrer-equipped three-necked round bottom flask, which was continuously sparged with argon to purge residual ozone. Afterwards, the ozone generation was halted and ozone-free methylene chloride was pumped through to flush the reactor. Triethylamine was added dropwise into the recipient flask.

The obtained crude product consisted of 210 m% with respect to the starting mass of the tire rubber, due to the remaining triethylamine and triethylamine n-oxide being present in the sample.

The crude product obtained from the trickle-bed reactor was subsequently analysed by gel permeation chromatography, as described in the Materials and Methods section above. The sample was first measured on a gel column with 100 Å pore size. Levulinic acid eluted at about 18 min. Succinic acid could not be observed as it is insoluble in the eluent. Compounds of at least 365 carbon atoms long (ref: polystyrene standard 4750 g/mol) or longer eluted together at 12 min, which corresponds to the cut-off MW (dead volume) of the column. When measuring the same sample on a gel column with 10⁶ Å pore size, levulinic acid eluted at about 22 min. The longer molecules are much more spread out between ca 17 min and ca 18 min (with peak at about 18.5 min) causing the intensity to be lower. Based on the elution profile of polystyrene standards, this fraction had a MW between 5 000 g/mol (elution time of 18.59 min) and 6 200 g/mol (elution time of 18.26 min).

### Example 4 - Residue Analysis

The residue obtained after filtration in examples 1 and 2 was analysed by thermogravimetric analysis. No pyrolysis took place during the analysis indicating that no residual rubber was present. CHNS-analysis was performed on a residue sample, which consisted of 84.63 m% carbon black and 15.37 m% of mineral oxide matrix. The residue was also analysed by ICP-OES which showed primarily 2.7 m% Zn, 4.5 m% Si, 1.9 m% S. Furthermore, 0.33 m% Ca, 0.14 m% Al and 0.12 m% Fe were detected alongside other elements in ppm range.

## Claims

1. A method for processing a rubber composite material, wherein the rubber composite material comprises vulcanized rubber polymers and a filler material, wherein the method comprises the steps of:
(i) providing the rubber composite material;
(ii) contacting the rubber composite material with a solvent, thereby obtaining solvent swollen rubber composite material;
(iii) contacting the solvent swollen rubber composite material with ozone, thereby obtaining solubilized reaction products in the solvent and a solid residue;
(iv) separating the solubilized reaction products from the solid residue;
(v) reacting the solubilized reaction products with an aqueous composition comprising between 98 and 100% (w/w) water, particularly with an aqueous composition comprising between 99 and 100% (w/w) water or with an organic base or an N-oxide thereof, thereby obtaining bifunctional oxygen-containing compounds; and/or recovering the filler material from the solid residue.

2. The method according to claim 1, wherein the rubber composite material is rubber tire material, particularly waste rubber tire material and/or wherein the filler material comprises carbon black and/or metal oxides.

3. The method according to claim 2, wherein carbon black and/or metal oxides are recovered in step (v).

4. The method according to any one of claims 1 to 3, wherein step (iii) is performed at a pH between pH 1.0 and 7.0.

5. The method according to any one of claims 1 to 4, wherein step (iii) comprises contacting the solvent swollen rubber composite material with a gaseous oxygen containing stream comprising ozone, particularly a gaseous oxygen containing stream comprising between 1 and 20 vol% of ozone; and/or contacting the solvent swollen rubber composite material with an ozone saturated solvent.

6. The method according to any one of claims 1 to 5, wherein step (iii) is performed at a temperature between -50°C and 100°C, particularly at a temperature between -40°C and 40°C or between 0°C and 25°C, and at atmospheric pressure or higher.

7. The method according to any one of claims 1 to 6, wherein step (iii) is performed for a time sufficient to solubilize at least 35% of the rubber polymers in the rubber composite material, particularly to solubilize at least 50% of the rubber polymers in the rubber composite material, more particularly to solubilize at least 75% of the rubber polymers in the rubber composite material, even more particularly to solubilize at least 90% of the rubber polymers in the rubber composite material, and/or wherein in step (iii), the molecular mass of the solubilized reaction products is controlled by controlling the time of contacting the solvent swollen rubber composite material with ozone.

8. The method according to any one of claims 1 to 7, wherein step (v) comprises:
(a) reacting the solubilized reaction products with an aqueous composition comprising between 98 and 100% (w/w) water or steam, particularly at a temperature between 80°C and 150°C or under reflux conditions, thereby obtaining bifunctional carboxylic acids or bifunctional carboxylic acid/keto compounds; or
(b) reacting the solubilized reaction products with an organic base or N-oxide thereof, particularly at a temperature ranging between 0°C and 50°C, thereby obtaining bifunctional carboxylic acids and aldehydes.

9. The method according to any one of claims 1 to 8, wherein step (v) is performed in the absence of hydrogen peroxide.

10. The method according to any one of claims 1 to 9, wherein step (v) further comprises removing or inactivating excess ozone prior to reacting the solubilized reaction products with water, an organic base, an oxygen scavenger or a metal-based heterogeneous catalyst.

11. The method according to any one of claims 1 to 10, wherein step (v) further comprises the step of recovering or isolating one or more of 4-oxopentanoic acid, 4-oxopentanal, succinic acid or succinic acid anhydride.

12. The method according to any one of claims 1 to 10, wherein step (v) further comprises the step of recovering or isolating at least one bifunctional oxygen-containing compound with molecular mass between 100 g/mol and 20000 g/mol, particularly between 500 g/mol and 10000 g/mol.

13. The method according to any one of claims 1 to 12, wherein the solvent is a hydrocarbon or an alcohol, or mixtures thereof, or a mixture of a hydrocarbon and/or an alcohol and water, particularly wherein the hydrocarbon is a saturated and/or halogenated aliphatic hydrocarbon.

14. The method according to any one of claims 1 to 13, wherein step (ii) comprises preparing a dispersion of the rubber composite material in the solvent, particularly at a concentration of between 1 and 500 g of rubber composite material per litre solvent.

15. The method according to any one of claims 1 to 14, wherein step (iii) and step (iv), and optionally step (ii), are performed essentially simultaneously, such as wherein the rubber composite material forms a packed bed of a trickle bed type reactor.

16. The method according to any one of claims 1 to 14, wherein the separation of the solubilized reaction products in the solvent from the solid residue in step (iv) is performed by filtration, membrane separation, sedimentation, hydrocyclonic separation, centrifugation or decantation.

## Patentansprüche

1. Verfahren zum Verarbeiten eines Kautschukverbundmaterials, wobei das Kautschukverbundmaterial vulkanisierte Kautschukpolymere und ein Füllstoffmaterial umfasst, wobei das Verfahren die folgenden Schritte umfasst:
(i) Bereitstellen des Kautschukverbundmaterials;
(ii) Inkontaktbringen des Kautschukverbundmaterials mit einem Lösungsmittel, wodurch ein lösungsmittelgequollenes Kautschukverbundmaterial erhalten wird;
(iii) Inkontaktbringen des lösungsmittelgequollenen Kautschukverbundmaterials mit Ozon, wodurch solubilisierte Reaktionsprodukte in dem Lösungsmittel und ein fester Rückstand erhalten werden;
(iv) Abtrennen der solubilisierten Reaktionsprodukte von dem festen Rückstand;
(v) Umsetzen der solubilisierten Reaktionsprodukte mit einer wässrigen Zusammensetzung, die zwischen 98 und 100 % (w/w) Wasser umfasst, insbesondere mit einer wässrigen Zusammensetzung, die zwischen 99 und 100 % (w/w) Wasser umfasst, oder mit einer organischen Base oder einem N-Oxid davon, wodurch bifunktionelle sauerstoffhaltige Verbindungen erhalten werden; und/oder Zurückgewinnen des Füllstoffmaterials aus dem festen Rückstand.

2. Verfahren nach Anspruch 1, wobei es sich bei dem Kautschukverbundmaterial um Kautschukreifenmaterial, insbesondere Altkautschukreifenmaterial, handelt und/oder wobei das Füllstoffmaterial Ruß und/oder Metalloxide umfasst.

3. Verfahren nach Anspruch 2, wobei Ruß und/oder Metalloxide in Schritt (v) zurückgewonnen werden.

4. Verfahren nach einem der Ansprüche 1 bis 3, wobei Schritt (iii) bei einem pH-Wert zwischen pH 1,0 und 7,0 durchgeführt wird.

5. Verfahren nach einem der Ansprüche 1 bis 4, wobei Schritt (iii) das Inkontaktbringen des lösungsmittelgequollenen Kautschukverbundmaterials mit einem gasförmigen sauerstoffhaltigen Strom, der Ozon umfasst, insbesondere einem gasförmigen sauerstoffhaltigen Strom, der zwischen 1 und 20 Vol.-% Ozon umfasst; und/oder das Inkontaktbringen des lösungsmittelgequollenen Kautschukverbundmaterials mit einem ozongesättigten Lösungsmittel umfasst.

6. Verfahren nach einem der Ansprüche 1 bis 5, wobei Schritt (iii) bei einer Temperatur zwischen -50 °C und 100 °C, insbesondere bei einer Temperatur zwischen -40 °C und 40 °C oder zwischen 0 °C und 25 °C, und bei Normaldruck oder darüber durchgeführt wird.

7. Verfahren nach einem der Ansprüche 1 bis 6, wobei Schritt (iii) für eine Zeit durchgeführt wird, die ausreicht, um mindestens 35 % der Kautschukpolymere in dem Kautschukverbundmaterial zu solubilisieren, insbesondere um mindestens 50 % der Kautschukpolymere in dem Kautschukverbundmaterial zu solubilisieren, spezieller um mindestens 75 % der Kautschukpolymere in dem Kautschukverbundmaterial zu solubilisieren, noch spezieller um mindestens 90 % der Kautschukpolymere in dem Kautschukverbundmaterial zu solubilisieren, und/oder wobei in Schritt (iii) die Molmasse der solubilisierten Reaktionsprodukte durch Steuerung der Zeit des Inkontaktbringens des lösungsmittelgequollenen Kautschukverbundmaterials mit Ozon gesteuert wird.

8. Verfahren nach einem der Ansprüche 1 bis 7, wobei Schritt (v) Folgendes umfasst:
(a) Umsetzen der solubilisierten Reaktionsprodukte mit einer wässrigen Zusammensetzung, die zwischen 98 und 100 % (w/w) Wasser oder Wasserdampf umfasst, insbesondere bei einer Temperatur zwischen 80 °C und 150 °C oder unter Rückflussbedingungen, wodurch bifunktionelle Carbonsäuren oder bifunktionelle Carbonsäure-/Ketoverbindungen erhalten werden; oder
(b) Umsetzen der solubilisierten Reaktionsprodukte mit einer organischen Base oder einem N-Oxid davon, insbesondere bei einer Temperatur im Bereich zwischen 0 °C und 50 °C, wodurch bifunktionelle Carbonsäuren und Aldehyde erhalten werden.

9. Verfahren nach einem der Ansprüche 1 bis 8, wobei Schritt (v) in Abwesenheit von Wasserstoffperoxid durchgeführt wird.

10. Verfahren nach einem der Ansprüche 1 bis 9, wobei Schritt (v) ferner das Entfernen oder Inaktivieren von überschüssigem Ozon vor dem Umsetzen der solubilisierten Reaktionsprodukte mit Wasser, einer organischen Base, einem Sauerstofffänger oder einem heterogenen Katalysator auf Metallbasis umfasst.

11. Verfahren nach einem der Ansprüche 1 bis 10, wobei Schritt (v) ferner den Schritt des Gewinnens oder Isolierens von einem oder mehreren von 4-Oxopentansäure, 4-Oxopentanal, Bernsteinsäure oder Bernsteinsäureanhydrid umfasst.

12. Verfahren nach einem der Ansprüche 1 bis 10, wobei Schritt (v) ferner den Schritt des Gewinnens oder Isolierens mindestens einer bifunktionellen sauerstoffhaltigen Verbindung mit einer Molmasse zwischen 100 g/mol und 20.000 g/mol, insbesondere zwischen 500 g/mol und 10.000 g/mol, umfasst.

13. Verfahren nach einem der Ansprüche 1 bis 12, wobei es sich bei dem Lösungsmittel um einen Kohlenwasserstoff oder einen Alkohol oder Mischungen davon oder eine Mischung von einem Kohlenwasserstoff und/oder einem Alkohol und Wasser handelt, wobei es sich bei dem Kohlenwasserstoff insbesondere um einen gesättigten und/oder halogenierten aliphatischen Kohlenwasserstoff handelt.

14. Verfahren nach einem der Ansprüche 1 bis 13, wobei Schritt (ii) das Herstellen einer Dispersion des Kautschukverbundmaterials in dem Lösungsmittel umfasst, insbesondere in einer Konzentration zwischen 1 und 500 g Kautschukverbundmaterial pro Liter Lösungsmittel.

15. Verfahren nach einem der Ansprüche 1 bis 14, wobei Schritt (iii) und Schritt (iv) und gegebenenfalls Schritt (ii) im Wesentlichen gleichzeitig durchgeführt werden, wie wobei das Kautschukverbundmaterial eine Schüttung eines Rieselbettreaktors bildet.

16. Verfahren nach einem der Ansprüche 1 bis 14, wobei die Abtrennung der solubilisierten Reaktionsprodukte in dem Lösungsmittel von dem festen Rückstand in Schritt (iv) durch Filtration, Membrantrennung, Sedimentation, Hydrozyklontrennung, Zentrifugation oder Dekantierung durchgeführt wird.

## Revendications

1. Procédé de traitement d'un matériau composite de caoutchouc, dans lequel le matériau composite de caoutchouc comprend des polymères de caoutchouc vulcanisé et un matériau de charge, dans lequel le procédé comprend les étapes de :
(i) fourniture du matériau composite de caoutchouc ;
(ii) mise en contact du matériau composite de caoutchouc avec un solvant, obtenant ainsi un matériau composite de caoutchouc gonflé par un solvant ;
(iii) mise en contact du matériau composite de caoutchouc gonflé par un solvant avec de l'ozone, obtenant ainsi des produits de réaction solubilisés dans le solvant et un résidu solide ;
(iv) séparation des produits de réaction solubilisés du résidu solide ;
(v) mise en réaction des produits de réaction solubilisés avec une composition aqueuse comprenant entre 98 et 100 % (p/p) d'eau, en particulier avec une composition aqueuse comprenant entre 99 et 100 % (p/p) d'eau ou avec une base organique ou un N-oxyde correspondant, obtenant ainsi des composés contenant de l'oxygène bifonctionnels ; et/ou récupération du matériau de charge à partir du résidu solide.

2. Procédé selon la revendication 1, dans lequel le matériau composite de caoutchouc est un matériau de pneumatique de caoutchouc, en particulier un matériau de pneumatique de caoutchouc usagé et/ou dans lequel le matériau de charge comprend du noir de carbone et/ou des oxydes métalliques.

3. Procédé selon la revendication 2, dans lequel le noir de carbone et/ou les oxydes métalliques sont récupérés dans l'étape (v).

4. Procédé selon l'une quelconque des revendications 1 à 3, dans lequel l'étape (iii) est réalisée à un pH compris entre 1,0 et 7,0.

5. Procédé selon l'une quelconque des revendications 1 à 4, dans lequel l'étape (iii) comprend la mise en contact du matériau composite de caoutchouc gonflé par un solvant avec un flux gazeux contenant de l'oxygène comprenant de l'ozone, en particulier un flux gazeux contenant de l'oxygène comprenant entre 1 et 20 % en volume d'ozone ; et/ou la mise en contact du matériau composite de caoutchouc gonflé par un solvant avec un solvant saturé avec de l'ozone.

6. Procédé selon l'une quelconque des revendications 1 à 5, dans lequel l'étape (iii) est effectuée à une température comprise entre -50 °C et 100 °C, en particulier à une température comprise entre -40 °C et 40 °C ou entre 0 °C et 25 °C, et à pression atmosphérique ou à une pression supérieure à la pression atmosphérique.

7. Procédé selon l'une quelconque des revendications 1 à 6, dans lequel l'étape (iii) est effectuée pendant un temps suffisant pour solubiliser au moins 35 % des polymères de caoutchouc dans le matériau composite de caoutchouc, en particulier pour solubiliser au moins 50 % des polymères de caoutchouc dans le matériau composite de caoutchouc, plus particulièrement pour solubiliser au moins 75 % des polymères de caoutchouc dans le matériau composite de caoutchouc, plus particulièrement encore pour solubiliser au moins 90 % des polymères de caoutchouc dans le matériau composite de caoutchouc, et/ou dans lequel, dans l'étape (iii), la masse moléculaire des produits de réaction solubilisés est régulée par régulation du temps de mise en contact du matériau composite de caoutchouc gonflé par un solvant avec l'ozone.

8. Procédé selon l'une quelconque des revendications 1 à 7, dans lequel l'étape (v) comprend :
(a) mise en réaction des produits de réaction solubilisés avec une composition aqueuse comprenant entre 98 et 100 % (p/p) d'eau ou de vapeur d'eau, en particulier à une température comprise entre 80 °C et 150 °C ou dans des conditions de reflux, obtenant ainsi des acides carboxyliques bifonctionnels ou des composés bifonctionnels acide carboxylique/céto ; ou
(b) mise en réaction des produits de réaction solubilisés avec une base organique ou N-oxyde de celle-ci, en particulier à une température comprise dans la plage entre 0 °C et 50 °C, obtenant ainsi des acides carboxyliques bifonctionnels et des aldéhydes.

9. Procédé selon l'une quelconque des revendications 1 à 8, dans lequel l'étape (v) est effectuée en l'absence de peroxyde d'hydrogène.

10. Procédé selon l'une quelconque des revendications 1 à 9, dans lequel l'étape (v) comprend en outre l'élimination ou l'inactivation de l'excès d'ozone avant la mise en réaction des produits de réaction solubilisés avec de l'eau, une base organique, un agent de piégeage d'oxygène ou un catalyseur hétérogène à base de métal.

11. Procédé selon l'une quelconque des revendications 1 à 10, dans lequel l'étape (v) comprend en outre l'étape de récupération ou d'isolement d'un ou plusieurs parmi l'acide 4-oxopentanoïque, le 4-oxopentanal, l'acide succinique ou l'anhydride d'acide succinique.

12. Procédé selon l'une quelconque des revendications 1 à 10, dans lequel l'étape (v) comprend en outre l'étape de récupération ou d'isolement d'au moins un composé contenant de l'oxygène bifonctionnel ayant une masse moléculaire comprise entre 100 g/mol et 20 000 g/mol, en particulier entre 500 g/mol et 10 000 g/mol.

13. Procédé selon l'une quelconque des revendications 1 à 12, dans lequel le solvant est un hydrocarbure ou un alcool, ou leurs mélanges, ou un mélange d'un hydrocarbure et/ou d'un alcool et d'eau, en particulier dans lequel l'hydrocarbure est un hydrocarbure aliphatique saturé et/ou halogéné.

14. Procédé selon l'une quelconque des revendications 1 à 13, dans lequel l'étape (ii) comprend la préparation d'une dispersion du matériau composite de caoutchouc dans le solvant, en particulier à une concentration comprise entre 1 et 500 g de matériau composite de caoutchouc par litre de solvant.

15. Procédé selon l'une quelconque des revendications 1 à 14, dans lequel l'étape (iii) et l'étape (iv), et éventuellement l'étape (ii), sont effectuées essentiellement simultanément, de telle sorte que le matériau composite de caoutchouc forme un lit à garnissage d'un réacteur du type à lit ruisselant.

16. Procédé selon l'une quelconque des revendications 1 à 14, dans lequel la séparation des produits de réaction solubilisés dans le solvant du résidu solide dans l'étape (iv) est effectuée par filtration, séparation membranaire, sédimentation, séparation hydrocyclonique, centrifugation ou décantation.
